(19) Europäisches Patentamt
European Patent Office
Office européen des brevets

(11) Numéro de publication : **0 176 431**
**B1**

(12) # FASCICULE DE BREVET EUROPÉEN

(45) Date de publication du fascicule du brevet : **11.01.89**

(51) Int. Cl.⁴ : **G 05 D 16/10**

(21) Numéro de dépôt : **85401804.1**

(22) Date de dépôt : **18.09.85**

(54) **Dispositif de régulation de pression à deux niveaux.**

(30) Priorité : **18.09.84 FR 8414260**

(43) Date de publication de la demande :
**02.04.86 Bulletin 86/14**

(45) Mention de la délivrance du brevet :
**11.01.89 Bulletin 89/02**

(84) Etats contractants désignés :
**BE DE GB IT NL SE**

(56) Documents cités :
**EP-A- 0 009 749**
**EP-A- 0 009 758**
**EP-A- 0 179 683**
**EP-A- 0 187 051**
**FR-A- 1 159 231**
**US-A- 3 517 681**
**PATENTS ABSTRACTS OF JAPAN, vol. 6, no. 253 (M-178) [1131], 11 décembre 1982, page 6 M 178; & JP - A - 57 146 960 (HITACHI SEISAKUSHO K.K.) 10-09-1982**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Leorat, Francois**
**98, boulevard de la Reine**
**F-78000 Versailles (FR)**
Inventeur : **Coutant, Patrick**
**14, rue Jean Edeline**
**F-92500 Rueil Malmaison (FR)**
Inventeur : **Aubert, Paul**
**71 M, Route du Pavé-Blanc**
**F-92140 Clamart (FR)**

(74) Mandataire : **Chassagnon, Jean-Alain et al**
**REGIE NATIONALE DES USINES RENAULT (S.0804)**
**F-92109 Boulogne-Billancourt Cedex (FR)**

**EP 0 176 431 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention se rapporte à un dispositif de régulation de pression à deux niveaux, comportant une seule vanne de régulation.

On connaît de nombreux dispositifs de régulation de pression plus ou moins complexes permettant d'obtenir deux niveaux de pression, tel que le dispositif décrit dans la demande EP-A-0 009 758, qui constitue le préambule de la revendication 1. Le but de la présente invention est de proposer un dispositif d'une grande simplicité de montage, qui permette d'obtenir facilement deux niveaux de pression, autorisant un débit d'utilisation à chacun de ces niveaux de pression.

Selon l'invention, le dispositif de régulation de pression à deux niveaux est décrit dans la partie caractérisante de la revendication 1.

Selon un mode de réalisation de l'invention, le tiroir de la vanne de régulation de pression est de construction symétrique, et les deux tiroirs peuvent être de même diamètre.

L'invention présente ainsi l'avantage d'obtenir à l'aide d'une structure simple, et moyennant un montage qui évite toute erreur, un dispositif de régulation qui fournisse deux niveaux de pression.

D'autres caractéristiques et avantages de la présente invention ressortiront de la description qui suit d'un mode de réalisation particulier, donné à titre d'exemple et nullement limitatif, en référence aux dessins annexés sur lesquels :

— la figure 1 représente l'ensemble du dispositif selon l'état de la technique en coupe ;

— la figure 2 représente l'ensemble du dispositif en coupe de l'invention.

Le dispositif de régulation selon l'invention consiste en un circuit hydraulique qui comporte une vanne de régulation de pression (VLP 3).

La vanne de régulation de pression VLP 3 comporte un tiroir 24, qui délimite avec le corps de ladite vanne de régulation quatre chambres référencées respectivement de la droite vers la gauche 1, 2, 3, 4 VLP 3. Un ressort 23 agit sur le tiroir 24, et s'appuie sur un bouchon fileté 25.

La pression de refoulement d'une pompe d'alimentation (non représentée sur les figures) du circuit hydraulique est conduite dans la chambre 2 VLP 3 par le canal 74. Le tiroir 24 est de construction symétrique. La pression régulée, régnant dans un canal 21 débouchant dans la chambre 3 VLP 3, est conduite en contre réaction sur la chambre 4 VLP 3, à travers un gicleur 22 d'amortissement, équilibrant ainsi la poussée du ressort 23 sur l'autre extrémité du tiroir 24. La pression ainsi régulée, dont la valeur est fixée par la tare en place du ressort 23 qui peut être ajustée grâce au bouchon 25 vissé dans le corps de la vanne VLP 3, donne une pression de référence $P_1$.

Sur le canal 21, est branché un canal 58 sur lequel se raccorde un canal 63. Un potentiomètre hydraulique, constitué par des gicleurs calibrés 65 et 66, et branché en dérivation entre le canal 58, où règne la pression de référence $P_1$, et le 0, crée dans le canal 63 une pression de référence intermédiaire $P_2$.

Il convient de noter, au passage, que le débit de fuite du potentiomètre hydraulique constitué par les gicleurs 65 et 66 crée un débit dans le circuit de pression régulée $P_1$, ce qui favorise le fonctionnement en régulation de la vanne de régulation de pression VLP 3.

La disposition selon l'invention de génération de la pression $P_2$ est illustrée par la figure 2. L'alésage de la vanne VLP 3 de section S 2 est prolongé, de façon qu'il puisse recevoir un tiroir de régulation additionnel 67. Le corps de ce tiroir est creusé de manière à pouvoir y loger un ressort de rappel 68 taré à une force F'. La pression $P_1$, présente dans la chambre 4 VLP 3 maintenant commune à la vanne VLP 3 et au tiroir 67, agit sur l'extrémité droite de ce tiroir 67. Par ailleurs, la pression $P_1$ est conduite par un canal 174, qui débouche dans le canal 21, dans la chambre 71 du tiroir 67. Le diamètre du corps du tiroir 67 est diminué au niveau de la chambre 71, de manière à former un rétrécissement cylindrique 70, créant ainsi, au droit de la chambre 72, une lèvre de régulation permettant de générer dans la chambre 72, et par conséquent dans le canal 63 déjà défini, la pression $P_2$. En effet, la pression $P_2$ est ramenée par le canal 175 dans la chambre 73, si bien que l'équation d'équilibre du tiroir 67 s'écrit :

$$P_2 \cdot S_2 + F' = P_1 \cdot S_2$$

soit

$$P_2 = P_1 - F'/S_2$$

Enfin, la chambre 73 est reliée au 0 par l'intermédiaire d'un gicleur de faible diamètre 69. Ceci permet de créer un débit de régulation permanent favorable à un bon fonctionnement des tiroirs 24 et 67. L'ensemble de régulation constitué autour du tiroir 67 se substitue au diviseur de pression donné par les gicleurs calibrés 65 et 66, et se raccorde au reste du circuit hydraulique par les canaux 21, 58, 63 et 74, déjà mentionnés.

**Revendications**

1. Dispositif de régulation à deux niveaux de pression comprenant une vanne de régulation de pression ($VLP_3$) de manière à obtenir un premier niveau de pression ($P_1$) avec un premier tiroir de régulation (24) caractérisé en ce que la vanne de régulation ($VLP_3$) comporte un tiroir de régulation additionnel (67) de manière à obtenir un deuxième niveau de pression ($P_2$), ledit tiroir (67) étant en équilibre d'une part sous l'action de la pression $P_1$ d'autre part sous l'action d'un ressort de rappel (68) et de la pression $P_2$ qui alimente un canal d'utilisation (63) d'une part et un gicleur de

mise à zéro (69) d'autre part.

2. Dispositif de régulation de pression selon la revendication 1 caractérisé en ce que les deux tiroirs (24, 67) ont le même diamètre.

3. Dispositif de régulation de pression selon l'une des revendications précédentes caractérisé en ce que le tiroir (24) est de construction symétrique.

**Claims**

1. A device for regulation at two pressure levels comprising a pressure regulating valve (VLP 3) so as to produce a first pressure level ($P_1$) with a first regulating spool (24) characterised in that the regulating valve (VLP 3) comprises an additional regulating spool (67) so as to provide a second pressure level ($P_2$), said spool (67) being in a condition of equilibrium on the one hand under the action of the pressure ($P_1$) and on the other hand under the action of a return spring (68) and the pressure ($P_2$) which feeds an operating conduit (63) on the one hand and a zero setting jet (69) on the other hand.

2. A pressure regulating device according to claim 1 characterised in that the two spools (24, 67) are of the same diameter.

3. A pressure regulating device according to one of the preceeding claims characterised in that the spool (24) is of symmetrical construction.

**Patentansprüche**

1. Zweistufen-Druckregelungsvorrichtung, mit einem Druckregelventil ($VLP_3$) zur Erzielung einer ersten Druckstufe ($P_1$) mit einem ersten Regelschieber (24), dadurch gekennzeichnet, daß das Druckregelventil ($VLP_3$) einen zusätzlichen Regelschieber (67) aufweist, um eine zweite Druckstufe ($P_2$) zur erzielen, wobei der Schieber (67) im Gleichgewicht ist einerseits durch die Wirkung des Druckes ($P_1$) und andererseits durch die Wirkung einer Rückholfeder (68) und des Druckes ($P_2$), der einerseits eine Versorgungsleitung (63) beaufschlagt und andererseits eine Rückstelldüse auf Null (69).

2. Druckregelungsvorrichtung nach Anspruch 1, dadurch gekennzeichnet, daß die beiden Schieber (24, 67) den gleichen Durchmesser aufweisen.

3. Druckregelungsvorrichtung nach einem der vorhergehenden Ansprüche, dadurch gekennzeichnet, daß der Regelschieber (24) eine symmetrische Konstruktion aufweist.

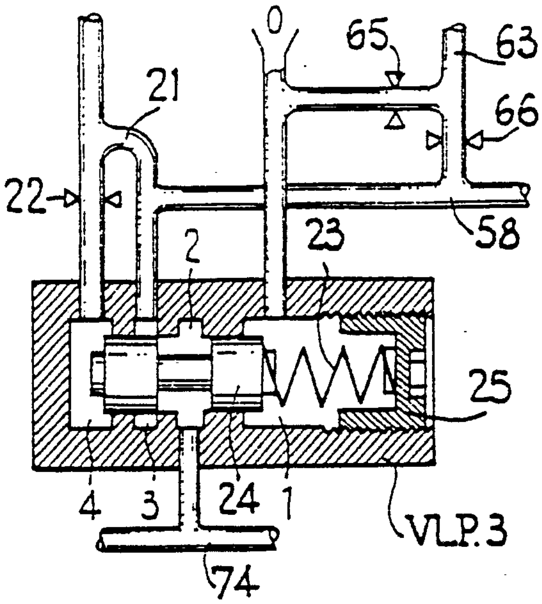
0
65
63
21
66
22
58
2
23
25
4
3
24
1
VLP.3
74

FIG.1

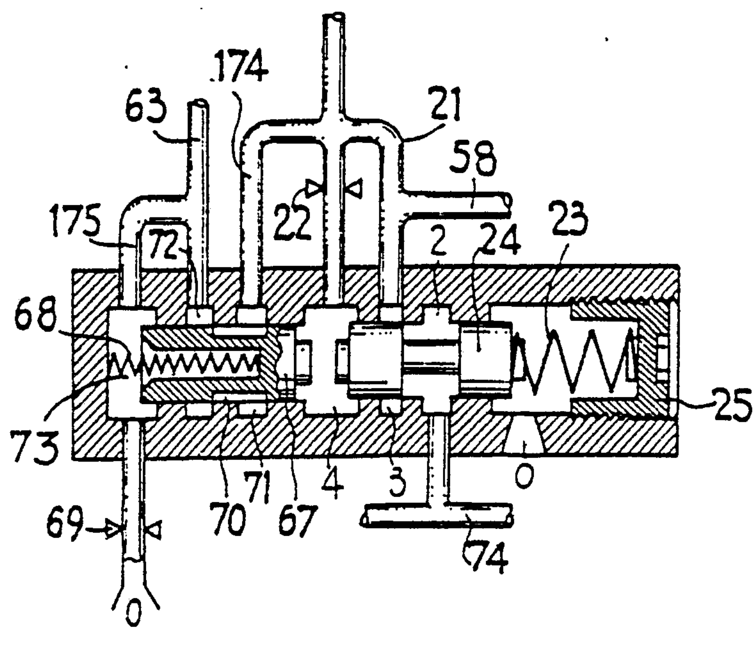
174
63
21
58
175
22
23
72
2
24
68
25
73
0
70
71
67
4
3
69
74
0

FIG.2